# EUROPÄISCHE PATENTANMELDUNG

(11) **EP 1 890 249 A1**
(43) Veröffentlichungstag der Anmeldung: **20.02.2008**
(21) Anmeldenummer: 07114324.2
(22) Anmeldetag: 14.08.2007
(51) Int. Cl.: G06K 7/00

(54) **Adapter für ein Lesegerät und Verwendung eines Adapters sowie Lesegerät**

(30) Priorität: 16.08.2006 DE 102006038147
(71) Anmelder: Vodafone Holding GmbH, 40213 Düsseldorf (DE)
(72) Erfinder: Düsener, Mark, 80337 München (DE)
(74) Vertreter: Müller, Thomas

(57) **Zusammenfassung**

Die vorliegende Erfindung betrifft einen Adapter mit wenigstens einer Funkschnittstelle zum Übertragen von Daten zwischen einer kontaktlosen Chipkarte und dem Adapter, mit wenigstens einer Schnittstelle zum Übertragen von Daten zwischen dem Adapter und einem kontaktbehafteten Lesegerät sowie mit einer Umsetzungseinrichtung zum Verfügbarmachen von kontaktlos empfangenen Daten für das kontaktbehaftete Lesegerät bzw. zum Verfügbarmachen von kontaktbehaftet empfangenen Daten für die kontaktlose Chipkarte. Ferner betrifft die Erfindung die Verwendung eines derartigen Adapters sowie ein kontaktbehaftetes Lesegerät.

## Beschreibung

Die vorliegende Erfindung betrifft einen Adapter zum Übertragen von Daten zwischen einer kontaktlosen Chipkarte oder deren Emulation durch eine Kombination eines Mobiltelefons mit integrierter Kontaktlostechnologie sowie der SIM-Karte und einem kontaktbehafteten Lesegerät. Ferner betrifft die Erfindung die Verwendung eines derartigen Adapters sowie ein kontaktbehaftetes Lesegerät.

Chipkarten, oft auch als Smartcard oder Integrated Circuit Card (ICC) bezeichnet, sind spezielle Plastikkarten mit eingebautem Chip, der eine Hardware-Logik, einen Speicher oder auch einen Mikroprozessor enthält.

Einfache Chipkarten, wie z. B. eine Krankenversicherungskarte oder eine Telefonkarte, bestehen nur aus einem Speicher, der ausgelesen oder beschrieben werden kann. Über eine Schnittstelle ist es möglich, sequenziell auf die einzelnen Speicherzellen zuzugreifen. Einsatz finden die so genannten Speicherkarten dort, wo es nur auf die Speicherung der Daten ankommt, nicht aber auf das Abwickeln komplexer Vorgänge.

Prozessor-Chipkarten weisen einen Mikroprozessor auf, über den auf die gespeicherten Daten zugegriffen werden kann. Der Umweg über den Mikroprozessor ermöglicht es, auf der Karte über kryptographische Verfahren die Daten vor fremdem Zugriff zu schützen. Die Möglichkeit auf diesen Mikroprozessoren anwendungsspezifische Programme laufen zu lassen, bietet viele Vorteile im Vergleich zu Speicherkarten. Dies ist relevant zum Beispiel bei Chipkarten die als Zahlungsmittel verwendet werden oder bei Chipkarten die sicherheitskritische Daten enthalten, wie z. B. bei Mobiltelefon-SIM-Karten.

Chipkarten können als sicherer Informationsspeicher dienen, aber sie bieten auch verschiedene Sicherheitsdienste, wie Authentifikation, Verschlüsselung, Signatur, etc., an, die in einer vertrauenswürdigen Umgebung genutzt werden können. Da die privaten Schlüssel auf der Chipkarte gespeichert sind und diese nicht verlassen, ist das Erspähen des Schlüssels nicht möglich, weswegen eine Signaturerzeugung auf der Chipkarte sehr sicher ist.

Ferner existieren Javakarten, die Mikroprozessor-Karten mit einem reduzierten Java als Betriebssystem sind. Bei diesen Karten kann ein Programmierer nach der Fertigstellung der Karte über ein Karten-Lese-Gerät und einer speziellen Ladesoftware neue Programme auf die Karte laden. So können Karten mit sehr speziellen Funktionalitäten in Kleinserie kosteneffizient hergestellt werden.

Chipkarten können über ein Chipkarten-Lesegerät, auch als Chipkartenterminal oder Interface Device bezeichnet, ausgelesen werden. Ein Chipkarten-Lesegerät ist die physikalische Schnittstelle zwischen einem Computer und einer Chipkarte. Über das Lesegerät wird die Chipkarte mit Strom versorgt und erhält von diesem auch das Taktsignal für den Prozessor des Computers. Gleichzeitig erfolgt über das Lesegerät die Datenübertragung für ein- oder ausgelesenen Daten. Chipkarten-Lesegeräte können mit dem Computer über eine USB-Schnittstelle, über den PCMCIA-Slot (PCMCIA = Personal Computer Memory Card International Association) oder über eine andere serielle Schnittstelle verbunden sein.

Es wird zwischen kontaktbehafteten und kontaktlosen Chipkarten unterschieden. Kontaktbehaftete Chipkarten weisen in der Regel sichtbare elektrische Kontakte oder Magnetstreifen auf. Diese werden mit Lesegeräten für kontaktbehaftete Chipkarten, im Folgenden auch als kontaktbehaftete Lesegeräte bezeichnet, ausgelesen, wobei eine mechanische Kontaktierung der elektrischen Kontakte durch das Lesegerät erfolgt. D.h., beim Auslesen der Daten wird mittels Kontaktfedern eine galvanische Verbindung zu den Kontaktflächen der Chipkarte hergestellt. Das Lesegerät versorgt den Chip mit einem Takt und der nötigen Energie und tauscht die Daten über eine serielle Verbindung aus. Kontaktbehaftete Chipkarten haben den Vorteil, dass die darauf befindlichen Daten gegen unerwünschte Zugriffe und Manipulationen geschützt werden können. Nachteilig hingegen ist die Anfälligkeit der Kontakte für Abnutzung, Korrosion und Verschmutzung.

Kontaktlose Chipkarten hingegen werden mit Lesegeräten für kontaktlose Chipkarten, im Folgenden auch als kontaktlose Lesegeräte bezeichnet, ausgelesen. Eine kontaktlose Chipkarte hat in der Regel die gleiche Bauform wie kontaktbehaftete Chipkarten, doch von Außen sind keinerlei elektrische Anschlüsse oder Bauelemente auf der Chipkarte zu erkennen. Bringt man eine kontaktlose Chipkarte jedoch in die Nähe der Antenne eines geeigneten Lesegerätes, so werden die gespeicherten Daten von der kontaktlosen Chipkarte gelesen, oder in dieselbe geschrieben. Kontaktlose Chipkarten haben deshalb gegenüber den herkömmlichen, kontaktbehafteten Chipkarten eine Reihe von Vorteilen. Kontaktlose Chipkarten sind unempfindlich gegen Schmutz und statische Aufladung. Zum Auslesen der kontaktlosen Chipkarten müssen diese nirgendwo "eingesteckt" werden, sondern können zum Auslesen auch versteckt, beispielsweise in einer Jackentasche, bleiben. Ferner unterliegen die kontaktlosen Lesegeräte keinerlei Verschleiß und können zum Schutz vor Vandalismus sogar unter einem Wandputz angebracht werden.

Nachteilig bei dem aus dem Stand der Technik bekannten Lesegeräten für Chipkarten ist, dass diese entweder zum Auslesen von kontaktbehafteten Chipkarten oder zum Auslesen von kontaktlosen Chipkarten ausgebildet sind. Ein Nutzer, beispielsweise ein Betreiber eines Geschäftes, eines kontaktbehafteten Lesegerätes, d.h. eines Lesegerätes, welches zum Auslesen von kontaktbehafteten Chipkarten geeignet ist, kann mit diesem keine kontaktlosen Chipkarten auslesen. Zum Auslesen von kontaktbehafteten Chipkarten und zum Auslesen von kontaktlosen Chipkarten muss er zwei unterschiedliche Lesegeräte besitzen, was zu hohen Kosten führt.

Aufgabe der vorliegenden Erfindung ist es, eine Vorrichtung zum Übertragen von Daten zwischen einer kontaktlosen Chipkarte und einem kontaktbehafteten Lesegerät zu schaffen, welche einfach realisierbar und kostengünstig ist.

Insbesondere soll ein kontaktbehaftetes Lesegerät, welches zum Auslesen von kontaktbehafteten Chipkarten ausgebildet ist, auf einfache und kostengünstige Weise um die Funktionalität des Auslesens von kontaktlosen Chipkarten erweitert werden.

Diese Aufgabe wird erfindungsgemäß durch einen Adapter mit den Merkmalen gemäß dem unabhängigen Patentanspruch 1, durch die Verwendung eines derartigen Adapters gemäß dem unabhängigen Patentanspruch 7 sowie durch ein kontaktbehaftetes Lesegerät mit den Merkmalen gemäß dem unabhängigen Patentanspruch 8 gelöst. Weitere Vorteile, Merkmale, Details, Aspekte und Effekte der Erfindung ergeben sich aus den Unteransprüchen sowie der Beschreibung. Merkmale und Details, die im Zusammenhang mit den erfindungsgemäßen Adapter gemäß Patentanspruch 1 beschrieben werden, gelten dabei selbstverständlich auch im Zusammenhang mit der erfindungsgemäßen Verwendungen des Adapters gemäß dem Patentanspruch 7 sowie dem kontaktbehafteten Lesegerät gemäß Patentanspruch 8, und umgekehrt.

Die Aufgabe wird gemäß dem ersten Aspekt der Erfindung durch einen Adapter mit wenigstens einer Funkschnittstelle zum Übertragen von Daten zwischen einer kontaktlosen Chipkarte und dem Adapter und mit wenigstens einer Schnittstelle zum Übertragen von Daten zwischen dem Adapter und einem kontaktbehafteten Lesegerät sowie mit einer Umsetzungseinrichtung zum Verfügbarmachen von kontaktlos empfangenen Daten für das kontaktbehaftete Lesegerät bzw. zum Verfügbarmachen von kontaktbehaftet empfangenen Daten für die kontaktlose Chipkarte, gelöst.

Eine kontaktlose Chipkarte stellt im Sinne der Erfindung eine Chipkarte, insbesondere eine Smartkarte, dar, deren Daten über eine Funkschnittstelle, insbesondere über eine Funkschnittstelle die zur Nahfeldkommunikation ausgebildet ist, ausgelesen werden können bzw. zu der über eine derartige Funkschnittstelle Daten übertragen werden können.

Eine kontaktbehaftete Chipkarte stellt in Sinne der Erfindung eine Chipkarte, insbesondere eine Smartkarte, dar, deren Daten über eine mechanische Kopplung ausgelesen bzw. auf die Daten über eine mechanische Kopplung übertragen werden können. Eine kontaktbehaftete Chipkarte kann auch einen Magnetstreifen aufweisen.

Ein kontaktbehaftetes Lesegerät stellt im Sinne der Erfindung ein Lesegerät dar, welches Daten über eine serielle Schnittstelle empfängt bzw. überträgt.

Durch den erfindungsgemäßen Adapter können Daten von einer kontaktlosen Chipkarte durch ein kontaktbehaftetes Lesegerät, welches zum Auslesen von kontaktbehafteten Chipkarten ausgelegt ist, ausgelesen werden. D.h., ein kontaktbehaftetes Lesegerät kann durch den Adapter um die Funktionalität des Auslesens einer kontaktlosen Chipkarte erweitert werden. Ferner kann durch den Einsatz des Adapters ein kontaktbehaftetes Lesegerät Daten an eine kontaktlose Chipkarte übertragen.

Der Adapter weist hierzu wenigstens eine Funkschnittstelle zum Übertragen von Daten zwischen einer kontaktlosen Chipkarte und dem Adapter und wenigstens eine Schnittstelle zum Übertragen von Daten zwischen dem Adapter und einem kontaktbehafteten Lesegerät auf.

Dabei ist der Adapter bevorzugt derart ausgebildet, dass er eine Funkschnittstelle zum Übertragen von Daten zwischen ihm und einer kontaktlosen Chipkarte und eine Schnittstelle zum Übertragen von Daten zwischen ihm und einem kontaktbehafteten Lesegerät aufweist. Eine Funkschnittstelle definiert die Gesamtheit der physikalischen und protokollarischen Festlegungen für den Datenaustausch. Durch einen derartigen Adapter können Daten von und zu einer kontaktlosen Chipkarte durch ein kontaktbehaftetes Lesegerät empfangen bzw. übertragen werden. Ein kontaktbehaftetes Lesegerät, welches zum Auslesen und Übertragen von Daten von bzw. zu einer kontaktbehafteten Chipkarte geeignet ist, kann durch den Einsatz des erfindungsgemäßen Adapters auch zum Auslesen und Übertragen von Daten von bzw. zu einer kontaktlosen Chipkarte genutzt werden. Der Adapter erweitert die Funktionalität eines kontaktbehafteten Lesegerätes.

Der Adapter weist eine Umsetzungseinrichtung zum Verfügbarmachen von kontaktlos empfangenen Daten für das kontaktbehaftete Lesegerät bzw. zum Verfügbarmachen von kontaktbehaftet empfangenen Daten für die kontaktlose Chipkarte auf. D.h., die Umsetzungseinrichtung des Adapters stellt kontaktlos empfangene Daten für ein kontaktbehaftetes Lesegerät zum Auslesen bzw. zum Empfangen zur Verfügung. Umgekehrt kann die Umsetzungseinrichtung kontaktbehaftet empfangene Daten für eine kontaktlose Chipkarte zur Verfügung stellen. Die Umsetzungseinrichtung kann dazu die empfangen oder zu übertragenden Daten entsprechend aufbereiten und ggf. umwandeln.

Anstelle einer Chipkarte kann auch eine Übertragung von Daten zwischen dem Adapter und der Emulation einer Chipkarte, d.h. einer Kombination eines Mobiltelefons mit integrierter Kontaktlostechnologie sowie einer SIM-Karte, und einem kontaktbehafteten Lesegerät erfolgen

Vorteilhaft ist dabei ein Adapter, bei dem die Umsetzungseinrichtung eine elektrische Schaltung aufweist. Eine elektrische Schaltung ist der Zusammenschluss von elektrischen bzw. elektromechanischen Komponenten zu einer funktionierenden Anordnung. Die Funktion der Schaltung wird hervorgerufen durch einen elektrischen Strom der in einem geschlossenen Stromkreislauf durch die Komponenten fließt.

Ferner ist ein Adapter bevorzugt, bei dem die Umsetzungseinrichtung eine Speichereinrichtung zum Speichern von kontaktlos und/oder kontaktbehaftet empfangenen Daten aufweist. Hierdurch können die zu übertragenden Daten gespeichert werden, bevor sie an den entsprechenden Empfänger weitergeleitet werden.

Ein Adapter der dadurch gekennzeichnet ist, dass die wenigstens eine Schnittstelle zum Übertragen von Daten zwischen dem Adapter und dem kontaktbehafteten Lesegerät derart ausgebildet ist, dass sie zum Übertragen von Daten in eine serielle Schnittstelle, insbesondere über eine ISO 7816 Schnittstelle, eine USB-Schnittstelle, einen Magnetstreifenleser oder über einen PCMCIA-Slot, des kontaktbehafteten Lesegerät einführbar ist, ist besonders bevorzugt einsetzbar. Eine serielle Schnittstelle stellt den Ein- und Ausgang eines elektronischen Gerätes, insbesondere eines kontaktbehafteten Lesegerätes dar. Bei der seriellen Datenübertragung werden Bits nacheinander über eine einzige Leitung übertragen. Die serielle Schnittstelle kann dabei eine RS-232-Schnittstelle sein. Vorteil bei seriellen Schnittstellen ist, dass nur wenige Leitungsadern notwendig sind und dadurch geringe Kosten entstehen. Bevorzugt kann die serielle Schnittstelle auch eine ISO 7816 Schnittstelle, eine USB-Schnittstelle, einen Magnetstreifenleser oder einen PCMCIA-Slot darstellen.
Die wenigstens eine Schnittstelle des Adapters zum Übertragen von Daten zwischen dem Adapter und einer kontaktlosen Chipkarte kann in Form einer Nahfeldkommunikationsschnittstelle ausgebildet ist. Nahfeldkommunikationsschnittstellen dienen zur Übertragung von Daten über eine kurze Entfernung, insbesondere über eine Entfernung von weniger als 50cm. Bevorzugt weist eine kontaktlose Chipkarte eine derartige Nahfeldkommunikationsschnittstelle auf. D.h., die Chipkarte weist einen Transponder, auch als RFID-Chip bezeichnet, auf. Der Transponder speichert Daten, die berührungslos und ohne Sichtkontakt gelesen werden können. Hierbei kann der Transponder der Chipkarte aktiv oder passiv ausgebildet sein. Bevorzugt ist er passiv ausgebildet, d.h. ohne eigene Energieversorgung. Die Energieversorgung des Transponders der Chipkarte erfolgt ebenso wie die Datenübertragung zwischen Transponder der Chipkarte und dem Lesegerät mittels elektromagnetischer Wellen. Bei niedrigen Frequenzen geschieht dies induktiv über ein Nahfeld. Das Lesegerät erzeugt über eine Antenne ein hochfrequentes Magnetfeld. Dadurch baut sich in der Spule des Transponders eine Spannung auf, welche als Stromversorgung genutzt wird und eine Batterie überflüssig macht. Dieses Prinzip nennt man "induktive Kopplung". Aus der erzeugten Wechselspannung in der Spule des Transponders wird eine Taktfrequenz abgeleitet, die der Mikroprozessor dann als Systemtakt nutzt. Die eigentliche Datenübertragung wird durch Ein- und Ausschalten des Magnetfeldes realisiert.

Diese so genannten RFID-Systeme, insbesondere solche gemäß den Spezifikationen ISO 14443 oder ISO 18092, sind unempfindlich gegen Umwelteinflüsse und die Bauform des Transponders ist sehr variabel.

Bevorzugt ist ferner ein Adapter, bei dem die wenigstens eine Schnittstelle zum Übertragen von Daten zwischen dem Adapter und dem kontaktbehafteten Lesegerät einen Magnetstreifen aufweist, wobei der Magnetstreifen über eine Datenleitung mit der Umsetzungseinrichtung verbunden ist. Ein derartiger Adapter kann in ein kontaktbehaftetes Lesegerät eingeführt werden. Der Magnetstreifen des Adapters wird anstelle einer kontaktbehafteten Chipkarte in das Lesegerät eingeführt. Der Magnetstreifen ist über eine Datenleitung mit der Umsetzungseinrichtung verbunden. Die Umsetzungseinrichtung bereitet die Daten derart auf, dass sie über die Funkschnittstelle des Adapters an eine kontaktlose Chipkarte übertragen werden können.

Gemäß eines zweiten Aspektes der Erfindung wird die Aufgabe durch die Verwendung eines zuvor beschriebenen Adapters zum Übertragen von Daten zwischen einer kontaktlosen Chipkarte und einem kontaktbehafteten Lesegerät gelöst. Durch die Verwendung eines derartigen erfindungsgemäßen Adapters kann ein bestehendes kontaktbehaftetes Lesegerät, welches zur Datenübertragung von und zu einer kontaktbehafteten Chipkarte geeignet ist, auch für die Datenübertragung von und zu einer kontaktlosen Chipkarte genutzt werden. Ein kontaktbehaftetes Lesegerät wird einfach und kostengünstig um die Funktionalität des Auslesens einer kontaktlosen Chipkarte bzw. der Übertragung von Daten zu einer kontaktlosen Chipkarte erweitert. Durch die Verwendung eines erfindungsgemäßen Adapters kann ein kontaktbehaftetes Lesegerät zusätzlich via Funk kommunizieren.

Der Adapter kann dazu verwendet werden, dass ein kontaktbehaftetes Lesegerät mit einer kontaktlosen Chipkarte kommuniziert. Die Verwendung eines derartigen Adapters spart erhebliche Kosten, da nicht zwei unterschiedliche Lesegeräte zum Kommunizieren mit unterschiedlichen Chipkarten benötigt werden.

Gemäß eines letzten Aspektes der Erfindung wird die Aufgabe durch ein kontaktbehaftetes Lesegerät zum Übertragen von Daten zu einer kontaktlosen Chipkarte, wobei das kontaktbehaftete Lesegerät eine serielle Schnittstelle aufweist, und wobei an der seriellen Schnittstelle ein zuvor beschriebener erfindungsgemäßer Adapter angeordnet ist, gelöst. Ein derartiges kontaktbehaftetes Lesegerät kann neben dem Auslesen von Daten von bzw. dem Übertragen von Daten zu einer kontaktbehafteten Chipkarte auch Daten einer kontaktlosen Chipkarte auslesen bzw. zu dieser übertragen. Dies stellt eine einfache und kostengünstige Erweiterung der Funktionalität eines kontaktbehafteten Lesegerätes dar.

## Patentansprüche

1. Adapter mit wenigstens einer Funkschnittstelle zum Übertragen von Daten zwischen einer kontaktlosen Chipkarte und dem Adapter und mit wenigstens einer Schnittstelle zum Übertragen von Daten zwischen dem Adapter und einem kontaktbehafteten Lesegerät sowie mit einer Umsetzungseinrichtung zum Verfügbarmachen von kontaktlos empfangenen Daten für das kontaktbehaftete Lesegerät bzw. zum Verfügbarmachen von kontaktbehaftet empfangenen Daten für die kontaktlose Chipkarte.

2. Adapter nach Anspruch 1, **dadurch gekennzeichnet, dass** die Umsetzungseinrichtung eine elektrische Schaltung aufweist.

3. Adapter nach Anspruch 1 oder 2, **dadurch gekennzeichnet, dass** die Umsetzungseinrichtung eine Speichereinrichtung zum Speichern von kontaktlos und/oder kontaktbehaftet empfangenen Daten aufweist.

4. Adapter nach einem der Ansprüche 1 bis 3, **dadurch gekennzeichnet, dass** die wenigstens eine Schnittstelle zum Übertragen von Daten zwischen dem Adapter und dem kontaktbehafteten Lesegerät derart ausgebildet ist, dass sie zum Übertragen von Daten in eine serielle Schnittstelle, insbesondere über eine ISO 7816 Schnittstelle, eine USB-Schnittstelle, einen Magnetstreifenleser oder über einen PCMCIA-Slot, des kontaktbehafteten Lesegerät einführbar ist.

5. Adapter nach einem der Ansprüche 1 bis 4, **dadurch gekennzeichnet, dass** die wenigstens eine Schnittstelle zum Übertragen von Daten zwischen dem Adapter und der kontaktlosen Chipkarte in Form einer Nahfeldkommunikationsschnittstelle ausgebildet ist.

6. Adapter nach einem der Ansprüche 1 bis 5, **dadurch gekennzeichnet, dass** die wenigstens eine Schnittstelle zum Übertragen von Daten zwischen dem Adapter und dem kontaktbehafteten Lesegerät einen Magnetstreifen aufweist, wobei der Magnetstreifen über eine Datenleitung mit der Umsetzungseinrichtung verbunden ist.

7. Verwendung eines Adapters nach einem der Ansprüche 1 bis 6 zum Übertragen von Daten zwischen einer kontaktlosen Chipkarte und einem kontaktbehafteten Lesegerät.

8. Kontaktbehaftetes Lesegerät zum Übertragen von Daten zu einer kontaktlosen Chipkarte, wobei das kontaktbehaftete Lesegerät eine serielle Schnittstelle aufweist, **dadurch gekennzeichnet, dass** an der seriellen Schnittstelle ein Adapter nach einem der Ansprüche 1 bis 6 angeordnet ist.
